# EUROPEAN PATENT SPECIFICATION

(11) **EP 3 023 893 B1**
(45) Date of publication and mention of the grant of the patent: **16.09.2020**
(21) Application number: 15195884.0
(22) Date of filing: 23.11.2015
(51) Int. Cl.: G06F 16/21, G06F 16/22, G06F 16/28

(54) **A RELATIONAL DATABASE, A DATABASE SERVER COMPRISING SUCH A DATABASE, A DATABASE MANAGEMENT SYSTEM AS WELL AS A METHOD OF STORING, RETRIEVING, ALTERING AND MANAGING DATA IN SUCH A DATABASE**
RELATIONALE DATENBANK, DATENBANKSERVER MIT SOLCH EINER DATENBANK, DATENBANKVERWALTUNGSSYSTEM SOWIE VERFAHREN ZUM SPEICHERN, WIEDERAUFRUFEN, VERÄNDERN UND VERWALTEN VON DATEN IN SOLCH EINER DATENBANK
BASE DE DONNÉES RELATIONNELLE, SERVEUR DE BASE DE DONNÉES COMPRENANT UNE TELLE BASE DE DONNÉES, SYSTÈME DE GESTION DE BASE DE DONNÉES ET PROCÉDÉ PERMETTANT DE STOCKER, RÉCUPÉRER, MODIFIER ET GÉRER DES DONNÉES DANS UNE BASE DE DONNÉES

(30) Priority: 24.11.2014 NL 2013868
(43) Date of publication of application: 25.05.2016
(73) Proprietor: TDF Group B.V., 5804 AB Venray (NL)
(72) Inventor: PELZER, Alexander Augustinus Maria, 5803 Le Venray (NL); BECKERS, Peter Fransiscus Hendrik, 5863 AA Blitterswijck (NL)
(74) Representative: Algemeen Octrooi- en Merkenbureau B.V.

(56) References cited:
- WO-A1-2013/071336
- US-B1- 7 620 665

## Description

The present invention is related to a relational database, stored in a computer memory of a computer device, and a database server comprising such a database.

The present invention is further related to a database management system for managing and working with such a database.

The present invention is also related to a method of storing, retrieving, altering and managing data in such a database.

### BACKGROUND OF THE INVENTION

Storing data is essential for all kinds of applications, executed on all kinds of computers, from personal computers, servers, handheld devices as well as other computer like devices such as (smart)televisions, etc. By storing data, such data is prevented from being lost when the computer stops executing the application, or even when the device is shut off, and can be retrieved once the application continues or when the device is turned on again. Storing data is essential for applications to function, there are however many ways of storing data.

In a most basic and very simple example data can be stored in a single text file. A text file provides flexibility and compatibility since it in principle can be read by all applications and can contain all information needed. Examples of such flat oriented data storage methods are a html file or an xml file.

Although storing data in a flat orientation in a single text file is flexible and very compatible, it is far from efficient. If for example a certain record needs to be found, the whole text file has to be read in order to determine if that record is present or not. Whenever large amounts of data are to be stored, handling and use of a text file is very cumbersome.

A database is considered an appropriate solution of storing large amounts of data. If the data is comprised in a plurality of tables, and these tables are structured to have certain relations defined between the tables and between the records comprised therein, such a database is known as a relational database. Not only the data itself is stored in relational database, also the methods of how to store, retrieve, alter and manage the data are stored therein. A system holding al this information is known as a relational database management system. In WO 2013/071336 A1 such a relational database management system is disclosed.

A telephone book could be considered as an example of organised data that could also be stored in a database in a meaningful way. Records could comprise names, addresses and telephone numbers. By putting them in an alphabetical order finding someone's telephone number is easy if the name is known. In this example three data fields can be distinguished, i.e. name, address and telephone number. These fields correspond to the columns of the table. Each of these fields can also have certain rules, i.e. business rules. The telephone number field may be defined as a string with a maximum length of 10 and the name field may be defined as a string with a maximum length of 25 for example.

In the telephone book example the name field may be defined as an index field by which the information comprised therein is sorted in ascending order. All field names, addresses and telephone numbers can together be used to define a table named contact list.

If however, at a later stage someone decides that finding people by their name alone is not sufficient anymore and finding people should be made possible through a zip code, the database is no longer very useful. The field zip code needs to be added to the database. However, although such an addition may seem, prima facie, simple and easy to implement, this is not so in practice. With adding the zip code field, the structure of the database, the design so to speak, changes. The data comprised in the database needs to be reformatted to the new structure. One can imagine that for current databases with higher levels of complexity than the telephone book example above, such reformatting of the structure and data requires thorough knowledge of database structures in general and thorough information of the specific database in question in order to maintain data integrity. A database analyst or database administrator is a person specialised in optimising the database and maintaining the integrity of the data stored in the database. He or she runs periodic tests to determine if the database is still functioning correctly and if new information is stored correctly. For instance, he or she will decide if in the zip code field example above certain modifications need to be performed on the structure to overcome errors, for example.

Nowadays modern computer architecture enable storage of gigantic amounts of information. Databases are essential in order to have such information stored in a structured manner. With rapidly increasing database sizes, the role of data analysts performing database optimisation is becoming of more and more importance. If a new application or new module of an existing application requires the use and storage of new information that does not fit in the current database structure the software developer of that application will have to turn to the database analyst first. This means that a data-analyst carries a very big responsibility and that new features in software applications and innovation in general are hindered seriously by this phenomenon.

As such there is a long felt need for storing information in a relational database in which the structure of the relational database is arranged for storing all kinds of data without changing the structure of the database and wherein the integrity of the data in the database is maintained.

### SUMMARY OF THE INVENTION

In order to overcome at least some of the disadvantages of relational databases known in the art, the present invention provides a relational database -stored in a computer memory- and comprising a plurality of data elements and a plurality of relational information of the plurality of data elements, wherein the relational database is comprised of a plurality of tables, at least comprising a data fields table, a data tables table a data records table and a data columns table, and wherein;
- the plurality of data elements is comprised in the data fields table;
- the plurality of relational information of the plurality of data elements is comprised in the data tables table, the data records table and the data columns table; wherein
- the data tables table comprises a plurality of records defining at least one table of the relational database;
- the data records table comprises a plurality of records defining at least one record of the at least one table of the data tables table;
- the data columns table comprises a plurality of records defining at least one column of the at least one table of the data tables table.

Information can be stored in many ways. For example, in a most basic and simple embodiment, information can be stored in a single text file. As explained above, such could be a simple implementation for holding a small amount of data, however, when the amount of data to be stored increases, use of such a text file is not efficient anymore.

Databases are a more suitable way of storing larger amounts of data. A database is an organized collection of information, i.e. data. The data can be considered a plurality of data elements. For example, imagine storing telephone book information. In a structured, database like manner there could be made use of a name table, an address table and a phone number table for example. The name table comprising records of all names, the address tables comprising all addresses and the phone number comprising all phone numbers. When these data elements are linked together a relational structure emerges. In a relational database the object is, amongst others, to store only unique data elements and make use of keys instead of storing duplicate elements.

Such relational database structures are nowadays very frequently used when large amounts of data are to be stored. During the development process of the database and the applications making use of the database, the database often expands very rapidly. Such a relational database does not only store the data elements, i.e. the payload or in the example above a new name, new address or new telephone number, the database also comprises relational information on these data element.

If in the example given above the application making use of the database requires the option of selecting a certain zip code, the existing structure prevents this. The structure needs to be amended and, for example, a zip code table is to be added, data elements of the zip code table are to be stored therein and keys in other tables are to be added to link both together.

This example is rather straightforward. However, in a more real life database implementation, elements, fields, tables and the like are added more often. The result is that known relational databases not only rapidly increase in size, but, even more challenging, increase in complexity continuously. The structure of the database is often changed, modified or altered during the lifetime of an application. Most of these changes have impact on the functionality of the database, i.e. its correctness or integrity of the data, the processing speed and errorless functionality of the database itself, etc. For an application with a large database a database analyst can have a daytime job testing the database for the functionality indicated above, correcting errors and optimising its functionality and efficiency.

The present invention does not have these drawbacks that known databases have. A programmer having to implement new features to an application making use of such a database doesn't want to spend time on testing the database to find errors and data integrity problems, solve these errors and problems and keep optimising the database structure. The inventors found out that the structure of the database can and should be kept constant over the developing process, even when new tables, records, relations, field or other information is added.

Hence, for all databases, newly created or under constant development, all elements are comprised in a database comprising, in its most simple embodiment, four tables, i.e. a data fields table in which all actual data elements are stored, a data tables table, a data records table and a data columns table. These tables, records and columns tables comprise the relational information of the data elements stored in the data fields table. Hence, the structure is stored in different tables than the payload, i.e. the data elements. In prior art databases the payload is spread over different tables and the table itself comprises the relational information.

Such a relational database according to the invention can comprise all data needed, currently used and data to be used in the future development of the database and corresponding application. That way the relational database according to the invention provides for full flexibility, i.e. all types of data can be stored in any way needed, such by dividing the storage of the actual payload, i.e. the data element and its structure in different tables.

In the first example the database according to the invention is comprised of at least four tables, the data fields table, the data tables table, the data records table and the data columns table. Whereas with prior art databases the payload, i.e. the actual data elements that need to be stored such as a first name "Peter", is stored together with its context or structure, the data elements stored in the database according to the invention are without such constrains. This means that the data elements are stored in the payload table, i.e. the data fields table and that without data from the other data tables table, data records table and data columns table that data element is merely an undefined set of characters/code. It is only defined by the context of the data stored within the other data tables, data records and data column table. The data related to the data element stored in the data fields tables gives the data element meaning. Without the structure or relational data stored in the three relational information tables, the before mentioned data element "Peter" could be considered a random set of characters. It is the data stored in data tables table, data records table and data columns table which give it value and define it as a name, or more in particular a first name, which for example can only be comprised of letters, cannot contain punctuation symbols, figures, and may for example only comprise a maximum of 20 characters, is related to second name and used in the list of telephone numbers.

The data fields table, as described above, differs from a standard table of a known relational database due to the absence of the structure of the data stored therein. The data fields table comprises records, also called tuples. Each record is considered a row within the table. Data is not only vertically oriented, but also horizontally. This means that each of the records contains several fields, such as the data element "Peter". A field of the data fields table can store certain properties of an entry. Hence, in the data fields table the properties of the entry are stored whereas the other tables store under which structure the property of the entry is made available.

A database can be considered as a set of related tables. The data tables table consists of rows and columns as any other table. The records of the table define all tables that belong to a certain database. When referring to the phone book example described above, the phone book database contains three tables, a name table, an address table and a phone number table. In accordance with an example of the invention the data tables table would comprise three records which define the three tables name, address and phone number. In this way a collection of properties of the entries can be made. With such an entry sets of data are defined which apply to that particular entry. A product entry can for example contain a set of pictures of that product.

In a known (relational) database the individual fields are defined by the column. The table as a whole is a relation, which consists of a heading and a body. A heading is a set of attributes or fields, a body is a set of records or n-tuples. The heading of the relation is also the heading of each of its tuples. In the data records tables all records that belong to a certain table are stored in relation to each other. For example, when referring to the phone book example again, all names are stored as names in the name table. These names form a set and are related to each other. The relational information of these related data elements, i.e. names, are stored as records of the data records table. That way the data elements, i.e. the payload stored in the data fields table is given a structure since it is related to, and defined by the entry in the data records table.

Tables have columns. The columns define the properties of the data stored in that column. In the data columns table the name and data type of the data elements in the data fields table is defined. Data types are specific classicisation's that identify one of the various types of data. Examples are integers, Booleans, floating-point numbers, characters or alphanumeric strings. It can however also be a currency, date, time or logical (1/0, yes/no, true/false) type. This way the records or entries so to speak of the data columns table define the whether the data element stored in the payload table, i.e. the data fields table is of a Boolean type for example. In known databases that information is stored together with the payload, i.e. the data element to be stored, in a single table.

In an example the relational database according to the invention further comprises a data bases table, wherein the databases table comprises a plurality of records, each record defining a single database.

As described, known databases can be structured in such a way that they comprise a plurality of tables, each of the tables storing particular records. In the example of the phone book above, all names are stored in a name table, all phone numbers in a phone number table and all addresses in an address table. The whole defines the phone book database. If phone numbers of retailers are to be added, the structure of that data can differ. Retailers do not want their personal information to be stored in the database but instead the name of their store. Also they could require additional information to be stored such as the type of store, e.g. warehouse, butcher, hardware store, etc. All of the retailer related information can be stored in a separate database, i.e. the yellow pages instead of the phone book. As such, the database according to an example of the invention comprises multiple underlying databases, e.g. in the example above, a private phone book and a retailer phone book, each have multiple underlying tables. These tables are according to the invention present as individual conventional tables within the database. All payload, i.e. the actual data elements to be stored, such as the new retail store name and the type of store, is stored in the data tables table. By the entries in the database tables, it is defined which data elements of the data fields table belong to a certain database, hence, which of the records in the data fields table belong to the yellow pages and which to the private phone book collection. That way data elements of both former databases retail and private are all stored in the same database structure, hence, no new databases and no new tables are created when the retail data elements where added. It could be argued that a database according to an example of the invention can comprise multiple virtual tables and at a higher level multiple virtual databases. These multiple virtual databases are defined in the already present table database table. Adding records, i.e. data elements of a new database, would only require a new entry in the database table to define the new database. The former tables of that new database are then defined in the data tables table. That way the relations of the data elements within the database are preserved, by storing the structure, i.e. the relational information itself as entries in a database with a non-changing structure, in stead of in the conventional manner where the structure of the database determines the relational information to a large degree

In an example the relational database further comprises a data branches table, wherein the data branches table comprises a plurality of records, each record defining a single branch of databases defined in the databases table.

Referring again to the example of the phone book and the yellow pages these can be considered as two different types of databases, with the same object, i.e. to search for telephone numbers. In a more real world example one could image a store to have a digitalised supply management system which holds information on all products that are in stock and offered for sale in the store. The store could for example be a drugstore. Each drugstore offers all kinds of products. The information about all those products can, in a conventional manner, be stored in a single database. That way every drugstore has its own database with products in stock and offered. One can imagine that the product of a drugstore differ from the products of a grocery store, a hardware store, or an online art gallery. A grocery store inventory database would require information about shelf life of products, a hardware store of size of products and an online art gallery of pictures of the artworks. The storage of that information requires different structures, hence tables and databases. All of the information, i.e. data elements, can be stored in a database according to an example of the invention without modification of the structure of the database. All data elements are stored in the data fields table and the databases table defines which data elements belong to one of the single (virtual) databases, for example one of the drugstores. Multiple (virtual) drugstore databases can together form a branch. These are defined by an entry in the braches table. In the example above the branches table can comprise records for a drugstore, grocery, hardware and online art gallery branch of which each of the branches comprise one or more underlying database(s) defined in the databases table.

In an example the relational database further comprise a data column rules table and a business rules table, wherein the data column rules table and the business rules table comprise a plurality of records, each record of the data column rules defining a relation between records of the data columns tables and records of the business rules table.

Business rules are used to define entities, attributes, relationships but most of all constrains. The business rules are important because they define the conditions that the database must meet. For example, a product should have a valid product number and a stock amount cannot be negative. These business rules help to prevent erroneous entries in the database, such as products without product number. If a product is stored in a database without a product number problems could occur when for example a query is executed to generate a list of product numbers of products with a stock amount lower than 5. When the database scheme or structure of a conventional database expands, it is important to keep the business rules up-to-date since it is not guaranteed that these still apply for all entries in the new structure.

To prevent a database from having to modify its structure upon newly added business rules, or the modification of present business rules due to expansion of the database, the present invention, in an example, uses a table for business rules and a table for data column rules. The business rules table comprises records that define the actual business rules, e.g. that negative stock amounts are prohibited. New business rules do not require additional tables or modification of present tables or modification of the database structure itself. It only requires a modification on the particular entry in the business rules table, or hence, adding a new entry in the business rules table.

The entries or records in the data column rules table define the relation between the business rules and the attributes or columns of the database to which they apply. Hence, in known databases a business rule applies to and is stored with the data element to which it applies, but in the database according to an example of the invention the business rule itself is stored as an entry in the business rules table and the data column tables defines where the entries of the business rules table, hence business rules, apply to.

In an example, the relational database further comprises an entries table, wherein the entries table comprises a plurality of records, each of the records of the entries table defining an object stored in the relational database, wherein the object is defined by a plurality of data elements defined in the data fields table.

A database is arranged for storing al kinds of information. On the lowest level that information is merely a bunch of data elements, such as names, amounts, labels, rules, prices, etc. Known databases are structured in such a way that these data elements are divided in the relevant tables and the tables and their interrelation defines how the information is structured. Referring back to the phone book example, plural names, the phone numbers and addresses are stored in three separate tables. In the present invention these data elements, i.e. all names, phone numbers and address are all stored in the data fields table and their structure in the data tables tabel, data columns tabel and data records table.

An application making use of such a phone book database would most likely not be in interested in a random series of phone numbers, nor in the amount of fields with the same address definition. The most likely information needed from the database is a single name, address and telephone number combination. That is considered a (single) telephone book entry. Hence, the entries table defines the objects stored in the relational database, such as a persons telephone number (i.e. name, address, phone number combination). The entries tables defines these objects. Other objects could also be bookshops for example, such on the bases of a yellow pages database in which data elements are combined that form a single entry of the yellow pages. And in accordance with the present invention, a set of data elements stored in the data fields table that together form an entry of a database.

In another example, the relational database further comprises an entry records table, the entry records table comprising a plurality of records, wherein one or more of the records of the entry records table define which of the entries of the data records table define the object.

These entries described above define objects such as products from an inventory maintenance system for example. It can however also be company related information form a customer relationship management system. These objects most likely differ from each other in that one object can be defined by two single fields stored in the data fields table, e.g. product bar code and price and another object can be defined by four single fields stored in the data fields table, e.g. name, address, amount of employees, and email address. These fields are defined by a set of records from other tables. Hence in the data entryRecords table it is defined which of the records belong to the entry, e.g. the product bar code and price.

In a further example, the data tables table comprises a user column arranged for authorisation of a user on the table defined in the data tables table.

In a further example, the databases table comprises a user column arranged for authorisation of a user on the database defined in the databases table.

In a further example, the branches table comprises a user column arranged for authorisation of a user on said branch defined in the branches table.

By adding a column to either the data tables table, databases table, branches table or a combination thereof, an authorisation options is provided. One can define a user as owner of a certain table and/or database and/or branch and grant all privileges to that user for that particular table and/or database and/or branch.

Authorisation defines users privileges and can be performed on two levels, i.e. on the structure and on profiles. The structure of the virtual databases entails the rights to read and/or write from/to particular branches and/or databases and/or tables. Branches, databases can only be created by administrators. Databases can, in principle, only be maintained by the owner of the database and by users with administrator rights. Hence, in accordance with an example of the invention, users are defined in the branches table and/or in the databases table and/or in the data tables table such that maintenance is restricted to that user.

At the profile level access is arranged to the content of the virtual data tables. A profile is composed of rights applicable to the profile, i.e. four types can be determined: read, write and delete profiles and to right to belong to a group of profiles. That profile is then assigned to the data tables table and an assigned profile defines the rights that an user has on that particular table and the profile group determines the virtual data records the user has access to in that particular table.

Each table and database for which a profile exists, is assigned with one or more profile groups. A profile group controls the privileges of the system for a particular group of users. Each record can also be assigned to a profile group. That way a user can access a subset of tables and records in which the profiles define the privileges for these tables and records.

In an example, the data tables table comprises at least one foreign key.

An in a further example the database further comprises a foreign key table comprising at least one record defining a field referred to by the at least one foreign key of the data tables table.

With foreign keys, the database is able to make use of referrals in the data tables in stead of the actual entry. There are several advantage in using these foreign keys, for example assured data integrity, prevented double entries, reduced storage space, safeguarded against orphaned records, etc.

The database preferable comprises a foreign key table. In this foreign key table the records are comprised that form the definition of the referral of the foreign keys in the data tables table. For example, the data columns table comprises a foreign key column having foreign keys. The foreign key is a referral to the foreign table. In the data fields table the record is specified that the foreign key is referring to by its field value.

In an example, the relational database further comprises a connector table, the connector table comprising a plurality of records, wherein each of the records of the connector table defines a connection between one of the databases defined in the databases table and an external database outside the relational database.

The relational database can comprise all kinds of data. However, often a database is already present and the information stored therein is used by a plurality of third party applications. If the storage is converted to a relational database in accordance with the invention that could cause problems for the third party applications since the structure of the database differs. In view thereof an external database connector is provided in the form of a connector table within the relational database. That connector table comprises records that define a connection with an external database. By a definition in the databases table, i.e. a column thereof that refers to the whether an external database is connected, the database defined in the databases table can be linked to a record of the connector table, hence, an external database defined therein. By use of a connector application that is custom made for a particular external database to which a connection is made, all data elements stored therein can be extracted. The structure in which the data elements are stored, i.e. the relational information of the data elements, is also extracted from the external database and both the data elements and the structure is stored in that external database as defined in the databases table of the relational database according to the invention which is linked (through the definition in the connector table) to an external database.

In a second aspect a database server is provided comprising storage means, wherein the storage means comprise a relational database according to any one of the previous descriptions.

In a third aspect a database management system is provided that is arranged for storing, retrieving, altering and managing data in a relational database according to any one of the previous descriptions.

In a fourth aspect a method is provided of storing, retrieving, altering and managing data in a relational database, the relational database is stored in a computer memory and comprises a plurality of data elements and a plurality of relational information of the plurality of data elements, wherein the relational database comprises a plurality of tables, at least comprising a data fields table, a data tables table a data records table and a data columns table, the method comprising the steps of:
- storing the plurality of data elements in the data fields table;
- storing at least one record in the data tables table, each of the at least one record defining a table of the relational database;
- storing at least one record in the data records table, each of the at least one record defining at least one record of the table defined in the data tables table;
- storing at least one record in the data columns table, each of the at least one record defining at least one column of the table defined in the data tables table.

The above-mentioned and other features and advantages of the invention are illustrated in the following description with reference to the enclosed drawings which are provided by way of illustration only and which are not limitative to the present invention.

### BRIEF DESCRIPTION OF THE DRAWINGS

Figure 1 shows an example of a known database;
Figure 2 shows an example of a database model in accordance with an example of the present invention;
Figure 3 shows an example of a database filled with information in accordance with an example of the present invention.

### DETAILED DESCRIPTION

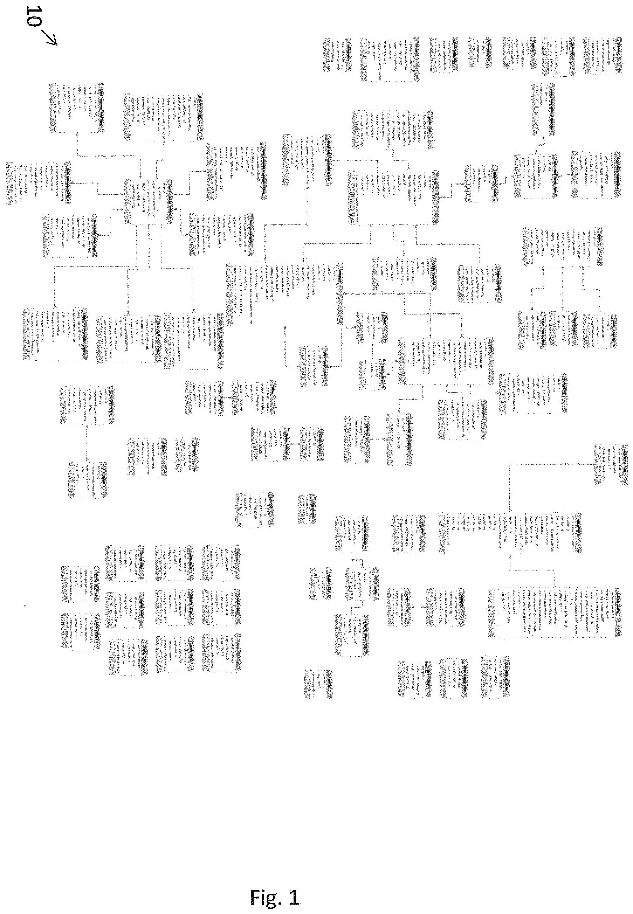

In Fig. 1 an example is shown of a database 10 according to the prior art. The database 10 shown here comprises many tables. Each of the tables contain several columns and sometimes small, sometimes large amounts of records, i.e. rows in the tables. Most of the time a database is initially not developed this complex, but start from a simple straight forward scheme. If for example a Customer Relationship Management, CRM, database is designed to be used with a conventional straightforward CRM application it could be sufficient to only contain a few tables with names, contact information, and the like. The database to hold such information is small by structure, although it can still be large by size, if for example a large amount of names is stored therein.

However, upon development of the CRM application, newly designed features therein can require additional information not yet present in the database and to which the database is in its current design, not capable of storing such data. Then the database structure needs to be altered, for example by adding one or more tables, or adding columns to already present tables. That may seem prima facie simple and easy. In practice it is not. When adding columns or tables the design of the database is changed and the data therein needs to be reformatted to the new structure/new design. Changing such a database requires thorough knowledge of database structures in general and of the database in question in order to maintain data integrity. If for example new tables are added, a database analyst or database administrator needs to test whether the database still functions correctly or if modification to the database are needed. When taking a database such as the prior art database 10 shown in figure 1, which is not exceptionally complex, performing such tests and performing modifications is cumbersome and hinders innovation of implementation of new features in the applications making use of the database.

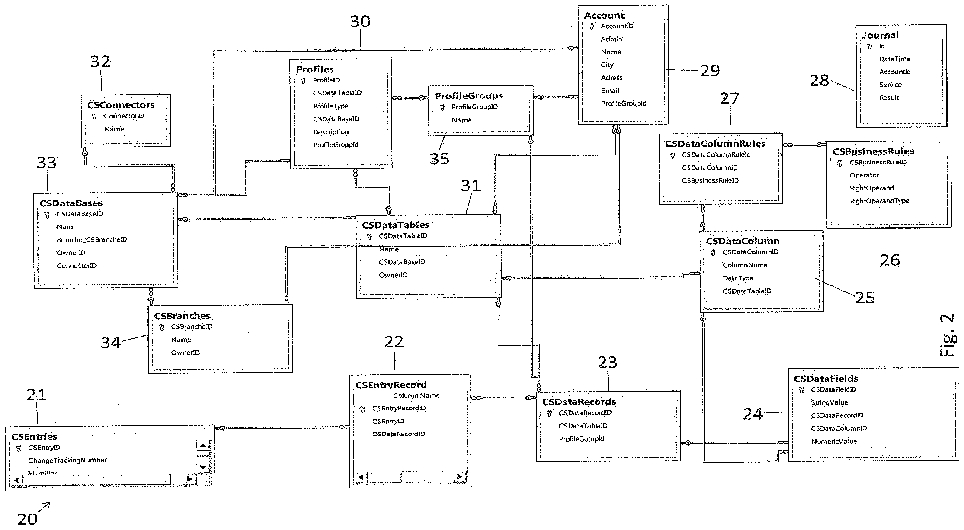

In Fig. 2 a model of a database 20 is shown in accordance with an example of the invention. The database comprises, in comparison with the database 10 of Fig. 1, only a few tables. All information stored in the database shown in Fig. 1, can also be stored in a database as shown in Fig. 2. Hence, the database in accordance with the invention is not restricted in any way to certain requirements of known databases that require models as shown in Fig. 1.

Some of the tables of the database model 20 are optional. In an example the database can function with only the CSDataFields table 24 (i.e. the data fields table) the CSDataColumn table 25, the CSDataRecords table 23 and the CSDataTables table 31. As indicated, a database can comprise multiple tables, each table having multiple columns and rows, i.e. records. The columns and tables of conventional databases and the relationship between columns, tables and records thereof define the structure, i.e. the relational information, of the data elements stored in the database. What that means is that with a known database all data elements are stored in accordance with a pre-designed database structure. If the structure is not able to store the data elements, the database structure itself needs to be modified. When looking at a database structure as shown in Fig. 1, that is very time consuming.

The inventors have come to the insight that by storing the structure of the information together with the payload, i.e. the relational data with the data elements, that all information can be stored with full flexibility in a database of which the structure thereof does not require modifications. Hence, the structural information relating to the records is stored in a table defining these records, hence the data records table i.e. the CSDataRecords table 23, the structural information relating to the columns is stored in a table defining these columns hence data columns table, i.e. the CSDataColumn table 25and the structural information relating to the table is stored in a table defining these tables, hence the data tables table, i.e. the CSDataTables table 31. The actual payload is stored in the CSDataFields table 24. On the basis of these four tables a conversion can be made from and to a conventional database with an original, conventional, layout of the tables with their columns and records.

Fig. 2 further shows a CSDataBases table 33. The database table 33 can comprise multiple records which all define different databases that are contained in the relational database 20 according to the invention. One database can for example be related to product information sold by one company, and the other to product information sold by another company. That way the database is arranged to store information from separate companies in one single database.

Fig. 2 further shows a CSBrances table 34. One can image that the product information for stores that operate in different branches, such as a hardware store and a grocery store differ in such a way from each other that it is preferred to have several databases to store the information related thereto separately. Therefor a brances table 34 is presented which can hold records for different branches. The database related to that branch is defined in the database table 33.

Databases can also be stored and maintained externally, by third parties for example. These databases can then be linked to or connected with by defining a connection in a CSConnector table 32, i.e. connectror table. If for example a database is already designed and in use for a CMS application, such a database can be defined in the CSDatabases table 33 and have a definition in the CSConnectors table 32 that the data elements stored in that database are present elsewhere. That way each external database can have its own connected application assigned thereto and which is arranged to read and/or write from the external database in a pre-defined manner. Hence a converter for the structure of the external database and the database in accordance with the invention is provided.

By using a profiles 30, profilesgroups 35 and an account 29 table users,profiles and profile groups can be defined in order to control access to and privileges for using and administrating one or more branches, databases and/or tables.

With the CSBusinessRules table 26 and the CSDataColumnRules table 27 the business rules themselves can be defined and can be defined to which columns these rules apply, the first by the CSBusinessRules table 26, the latter by the CSDataColumnRules table 27. Business rules are important to define the conditions that the database must meet, examples thereof are products should have a valid product code and stock amounts cannot be negative. False entries are prevented that way. When a new type of information is to be stored that requires a business rule. If the business rule, is not yet used elsewhere in the database and hence already present in the CSbusinessRules table 26, the business rule can be defined in that table 26. The CSDataColumnRules table 27 then defines to which the CSBusinessRule applies

Fig. 2 further shows a CSEntries table 21 and a CSEntryRecord table 22. An application such as a CMS application most likely will perform queries on regular basis that for example request a combination of a first name, last name, telephone number and address. A supply management application will most likely perform queries on a regular basis on a combination of product bar code, product stock amount and retail price for example. Such a unique product bar code, stock amount and retail price can be considered an object. The objects are defined in the CSEntries 21 and the CSEntryRecord table 22 to enhance the use of queries for the applications making use of the database. That way the object links all data in the database together, which belongs together. For example, all relevant information such as retail price, stock amount, and product bar code are linked by the entries tables.

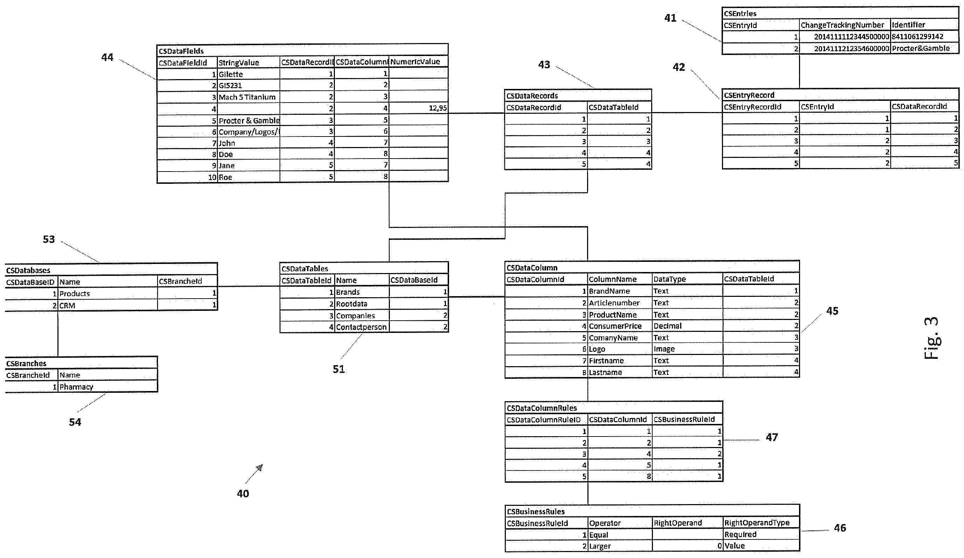

Fig. 3 shows an implementation of a database 40 in accordance with an example of the present invention. Ten tables are shown which can store all present and future data needed. All relational information is stored in the structure shown, and new relational information or a modification of present relational information does not require a change in the database 40 as shown here.

What is shown here is a database 40 that, merely as example and not in any way restricted to this example consists of two entries. One entry is a certain product; in particular a Gilette Mach 5 Titanium and the other entry is a company; in particular Procter & Gamble.

Since a Gilette Mach 5 Titanium is a pharmacy product and Procter & Gamble is supplier of pharmacy products, both these entries belong to a single branch, i.e. the pharmacy branch. Table 54 is the CSBrances table in which the branches are defined. The table consists of two columns of which the first column is the primary key column for that particular table. The primary key of a (relational) database uniquely identifies each record in the table. Hence, the value of the fields in the primary key column must be unique. If another branch was to be defined, a hardware store branch for example, a second row would be present in the branches table 54 which would have CSBrancelD 2 assigned to it and the name "hardware" for example. However, in the present example, only one single branch is shown.

The branch pharmacy comprises two separate databases. These databases however can be considered virtual databases since they are both contained in a single database 40 according to the invention. The (virtual) databases are defined in the CSDatabase table 53. That table consists of three columns, a CSDataBaselD column, being the primary key of that table, a name column that defines the name of the database, and a CSBranchID column to assign the database to a particular branch. The first record of the databases table 53 defines a first products database, which belongs to the branch pharmacy, hence, CSBranchID 1. The second record defines a second CRM database, which also belongs to the same branch and thus has the same CSBranchID 1.

Databases comprise tables. The two databases Products and CRM also comprise tables. These tables are defined as records in the CSDataTables table 51. Each record thereof defines a single table. The first column is also the primary key for the CSDataTables table and the second column defines the name of the table. The last column defines to which database that table belongs. In the example shown here, four tables are defined. Two tables Brands and Rootdata belong to the first database with ID 1, i.e. the products database defined in the CSDatabases table 53.

That way a branch is defined, having underlying databases, with underlying tables. Tables have columns. The columns of the tables defined in the CSDataTables table 51 are defined in the CSDataColumn table 45. Each of the records defines a single column in one of the tables of the datatables table 51. The CSDataColumn table comprises four columns. The first column is the primary key to uniquely identify the records, the second is the name of the column, the third defines the type of the fields of that column, i.e. a text type, image type, etc., the fourth defines for which table the column is defined. In the example here, table with table ID 1, i.e. the brands table defined in CSDataTables 51 comprises one column, i.e. brand name which is a text field. The second table, Rootdata, comprises three columns, i.e. Article number, product name and consumer price. The third table, i.e. companies, comprises two columns company name and logo. The last table, i.e. contact person, comprises two columns as well, being first name and last name.

To some of the columns business rules apply. For example a consumer price must be larger than zero. The individual business rules, for example larger than zero are defined in the CSBusinessRules table 46. That table comprises four columns. The first is the primary key, the second the operator, the third the value of the operator and the fourth the type thereof. Here two business rules are defined; a field is required and a value must be larger than zero. These business rules can than be applied to certain columns of certain tables by definition in the CSDataColumnRules table 47. That table comprises three columns, a primary key, the column ID of the column defined in the columns table 45 and the ID of the business rule defined in the business rule table 46. For example fields of the columns Brand name and Article number are required. The same applies for the Company name and Last name columns. The consumer price requires a value larger than zero.

Each tables comprises multiple rows or records. Thus a record can comprise one field, in case of a table consisting of one column, two fields if two tables, etc. The records are defined in the CSDataRecords table 43. That table comprises two columns a primary key and a CSDataTablelD which is a link to the primary key of the CSDataTables table 51. Hence, in this example each of the tables defined in the CSdataTables table 51 comprise a single record and/or entry, except for the table contactperson, that consist of two records or entries since the records table comprises two entries related to table ID 4.

Now the branch, the underlying databases, tables with columns and records are defined. Thus the structure of the database is stored in the tables branch 54, databases 53, tables 51, columns 45 and records 43. There is however no payload yet. The actual content or information to be stored, i.e. the data elements, are missing. These however are defined in the CSDataFields table 44. All data elements (fields) that are stored in a conventional database in the right table are in the database according to the invention stored in a single table, i.e. the data fields table 44.

The data fields table 44 comprises five columns. The first is the primary key, the second the string value, i.e. the field value, the third the record ID, the fourth the column ID and the last the numeric value. In that way an entry or record of that table 44 contains information of what is stored, i.e. the string value, and where it is stored, i.e. in which row and column, i.e. record ID and column ID. On the basis of the CSDataRecords table it can be determined to which table that payload is assigned.

The CSEntries table 41 is arranged to store the objects for which the database is used. For example, a product or company. In the example shown here that table consists of three columns, i.e. a first primary key column, a second changetrackingnumber column and an identifier column. In the example a single product is stored in the database, i.e. a product with identification number 8411061299142, and a company with name Procter&Gamble. Both these entries have a changetrackingnumber which holds a time stamp when the last modification took place.

The CSEntries table 41 is linked to the CSEntryRecord table which defines what the object stored as entry contains. It comprises three columns, a primary key, a CSEntrylD to refer to the records of the CSEntries table 41 and a CSDataRecordID to refer to the records within the CSDataRecords table 43. In the example shown here, the product entry with entry ID 1 of the entries table 41 consists of two records with record ID 1 and 2 hence, with data in tables 1 and 2. The company entry with entry ID 2 of the entries table 41 consists of three records with record ID 3, 4 and 5 hence, with a record in table 3 and two records in table 4. The actual data elements or fields are stored in the data fields table 44.

Based on the above description, a skilled person may provide modifications and additions to the method and arrangement disclosed, which modifications and additions are all comprised by the scope of the appended claims.

## Claims

1. A relational database (20), stored in a computer memory, said relational database comprising a plurality of data elements and a plurality of relational information of said plurality of data elements, wherein said relational database is comprised of a plurality of tables (23, 24, 25, 31), at least comprising a data fields table (24), a data tables table (31) a data records table (23) and a data columns table (25), and wherein;
- said plurality of data elements is comprised in said data fields table (24);
- said plurality of relational information of said plurality of data elements is comprised in said data tables table (31), said data records table (23) and said data columns table (25); **characterized in that**
- said data tables table (31) comprises a plurality of records defining at least one table of said relational database;
- said data records table (23) comprises a plurality of records defining at least one record of said at least one table of said data tables table (31);
- said data columns table (25) comprises a plurality of records defining at least one column of said at least one table of said data tables table (31).

2. The relational database (20) according to claim 1, wherein said relational database further comprises a data bases table (33), wherein said databases table (33) comprises a plurality of records, each record defining a single database.

3. The relational database (20) according to claim 2, wherein said relational database further comprises a data branches table (34), wherein said data branches table (34) comprises a plurality of records, each record defining a single branch of databases defined in said databases table (33).

4. The relational database (20) according to any of the previous claims, wherein said relational database further comprise a data column rules table (27) and a business rules table (26), wherein said data column rules table (27) and said business rules table (26) comprise a plurality of records, each record of said data column rules defining a relation between records of said data columns table (25) and records of said business rules table (26).

5. The relational database (20) according to any of the previous claims, wherein said relational database further comprises an entries table (21), said entries table comprising a plurality of records, each of said records of said entries table (21) defining an object stored in said relational database (20), wherein said object is defined by a plurality of data elements defined in said data fields table (24).

6. The relational database (20) according to claim 5, wherein said relational database further comprises an entry records table (22), said entry records table (22) comprising a plurality of records, wherein one or more of said records of said entry records table (22) define which of said entries of said data records table (23) define said object.

7. The relational database (20) according to any of the previous claims, wherein said data tables table (31) comprises a user column arranged for authorisation of a user on said table defined in said data tables table (31).

8. The relational database (20) according to claims 2, wherein said databases table (33) comprises a user column arranged for authorisation of a user on said database defined in said databases table (33).

9. The relational database (20) according to claims 3, wherein said branches table (34) comprises a user column arranged for authorisation of a user on said branch defined in said branches table (34).

10. The relational database (20) according to any of the previous claims, wherein said data tables table (31) comprises at least one foreign key.

11. The relational database (20) according to claim 10, wherein said database further comprises a foreign key table comprising at least one record defining a field referred to by said at least one foreign key of said data tables table (31).

12. The relational database (20) according to any of the previous claims, wherein said relational database further comprises a connector table (32), said connector table (32) comprising a plurality of records, wherein each of said records of said connector table (32) defines a connection between one of said databases defined in said databases table (33) and an external database outside said relational database (20).

13. A database server comprising storage means, wherein said storage means comprise a relational database (20) according to any one of the previous claims 1-12.

14. A database management system arranged for storing, retrieving, altering and managing data in a relational database (20) according to any one of the previous claims 1-12.

15. A method of storing, retrieving, altering and managing data in a relational database (20), said relational database (20) is stored in a computer memory and comprises a plurality of data elements and a plurality of relational information of said plurality of data elements, wherein said relational database comprises a plurality of tables (23, 24, 25, 31), at least comprising a data fields table (24), a data tables table (31) a data records table (23) and a data columns table (25), said method being **characterized by** comprising the steps of:
- storing said plurality of data elements in said data fields table (24);
- storing at least one record in said data tables table (31), each of said at least one record defining a table of said relational database (20);
- storing at least one record in said data records table (23), each of said at least one record defining at least one record of said table defined in said data tables table (31);
- storing at least one record in said data columns table (25), each of said at least one record defining at least one column of said table defined in said data tables table (31).

## Patentansprüche

1. Relationale Datenbank (20), die in einem Computerspeicher gespeichert ist, wobei die relationale Datenbank mehrere Datenelemente und mehrere relationale Informationen der mehreren Datenelemente umfasst, wobei die relationale Datenbank aus mehreren Tabellen (23, 24, 25, 31) besteht, die wenigstens eine Datenfelder-Tabelle (24), eine Datentabellen-Tabelle (31), eine Datensätze-Tabelle (23) und eine Datenspalten-Tabelle (25) umfassen, und wobei:
- die mehreren Datenelemente in der Datenfelder-Tabelle (24) enthalten sind;
- die mehreren relationalen Informationen der mehreren Datenelemente in der Datentabellen-Tabelle (31), der Datensätze-Tabelle (23) und der Datenspalten-Tabelle (25) enthalten sind; **dadurch gekennzeichnet, dass**
- die Datentabellen-Tabelle (31) mehrere Datensätze umfasst, die wenigstens eine Tabelle der relationalen Datenbank definieren;
- die Datensätze-Tabelle (23) mehrere Datensätze umfasst, die wenigstens einen Datensatz der wenigstens einen Tabelle der Datentabellen-Tabelle (31) definieren;
- die Datenspalten-Tabelle (25) mehrere Datensätze umfasst, die wenigstens eine Spalte der wenigstens einen Tabelle der Datentabellen-Tabelle (31) definieren.

2. Relationale Datenbank (20) nach Anspruch 1, wobei die relationale Datenbank ferner eine Datenbanken-Tabelle (33) umfasst, wobei die Datenbanken-Tabelle (33) mehrere Datensätze umfasst, wobei jeder Datensatz eine einzelne Datenbank definiert.

3. Relationale Datenbank (20) nach Anspruch 2, wobei die relationale Datenbank ferner eine Datenverzweigungen-Tabelle (34) umfasst, wobei die Datenverzweigungen-Tabelle (34) mehrere Datensätze umfasst, wobei jeder Datensatz eine einzelne Verzweigung der in der Datenbanken-Tabelle (33) definierten Datenbanken definiert.

4. Relationale Datenbank (20) nach einem der vorhergehenden Ansprüche, wobei die relationale Datenbank ferner eine Datenspaltenregeln-Tabelle (27) und eine Geschäftsregeln-Tabelle (26) umfasst, wobei die Datenspaltenregeln-Tabelle (27) und die Geschäftsregeln-Tabelle (26) mehrere Datensätze umfassen, wobei jeder Datensatz der Datenspaltenregeln eine Beziehung zwischen den Datensätzen der Datenspalten-Tabelle (25) und den Datensätzen der Geschäftsregeln-Tabelle (26) definiert.

5. Relationale Datenbank (20) nach einem der vorhergehenden Ansprüche, wobei die relationale Datenbank ferner eine Einträge-Tabelle (21) umfasst, wobei die Einträge-Tabelle mehrere Datensätze umfasst, wobei jeder der Datensätze der Einträge-Tabelle (21) ein Objekt definiert, das in der relationalen Datenbank (20) gespeichert ist, wobei das Objekt durch mehrere Datenelemente definiert ist, die in der Datenfelder-Tabelle (24) definiert sind.

6. Relationale Datenbank (20) nach Anspruch 5, wobei die relationale Datenbank ferner eine Eintragsdatensätze-Tabelle (22) umfasst, wobei die Eintragsdatensätze-Tabelle (22) mehrere Datensätze umfasst, wobei einer oder mehrere der Datensätze der Eintragsdatensätze-Tabelle (22) definieren, welche der Einträge der Datensätze-Tabelle (23) das Objekt definieren.

7. Relationale Datenbank (20) nach einem der vorhergehenden Ansprüche, wobei die Datentabellen-Tabelle (31) eine Anwenderspalte umfasst, die zur Autorisierung eines Anwenders in der Tabelle, die in der Datentabellen-Tabelle (31) definiert ist, bestimmt ist.

8. Relationale Datenbank (20) nach Anspruch 2, wobei die Datenbanken-Tabelle (33) eine Anwenderspalte umfasst, die zur Autorisierung eines Anwenders in der Datenbank, die in der Datenbanken-Tabelle (33) definiert ist, bestimmt ist.

9. Relationale Datenbank (20) nach Anspruch 3, wobei die Verzweigungen-Tabelle (34) eine Anwenderspalte umfasst, die zur Autorisierung eines Anwenders in der Verzweigung, die in der Verzweigungen-Tabelle (34) definiert ist, bestimmt ist.

10. Relationale Datenbank (20) nach einem der vorhergehenden Ansprüche, wobei die Datentabellen-Tabelle (31) wenigstens einen Fremdschlüssel umfasst.

11. Relationale Datenbank (20) nach Anspruch 10, wobei die Datenbank ferner eine Fremdschlüssel-Tabelle umfasst, die wenigstens einen Datensatz umfasst, der ein Feld definiert, auf das durch den wenigstens einen Fremdschlüssel der Datentabellen-Tabelle (31) verwiesen wird.

12. Relationale Datenbank (20) nach einem der vorhergehenden Ansprüche, wobei die relationale Datenbank ferner eine Verbinder-Tabelle (32) umfasst, wobei die Verbinder-Tabelle (32) mehrere Datensätze umfasst, wobei jeder der Datensätze der Verbinder-Tabelle (32) eine Verbindung zwischen einer der in der Datenbanken-Tabelle (33) definierten Datenbanken und einer externen Datenbank außerhalb der relationalen Datenbank (20) definiert.

13. Datenbank-Server, der Speichermittel umfasst, wobei die Speichermittel eine relationale Datenbank (20) nach einem der vorhergehenden Ansprüche 1-12 umfassen.

14. Datenbank-Managementsystem, dass zum Speichern, Wiedergewinnen, Ändern und Managen von Daten in einer relationalen Datenbank (20) nach einem der vorhergehenden Ansprüche 1-12 angeordnet ist.

15. Verfahren zum Speichern, Wiedergewinnen, Ändern und Managen von Daten in einer relationalen Datenbank (20), wobei die relationale Datenbank (20) in einem Computerspeicher gespeichert ist und mehrere Datenelemente und mehrere relationale Informationen der mehreren Datenelemente umfasst, wobei die relationale Datenbank mehrere Tabellen (23, 24, 25, 31) umfasst, die wenigstens eine Datenfelder-Tabelle (24), eine Datentabellen-Tabelle (31), eine Datensätze-Tabelle (23) und eine Datenspalten-Tabelle (25) umfassen, wobei das Verfahren **dadurch gekennzeichnet ist, dass** es die folgenden Schritte umfasst:
- Speichern der mehreren Datenelemente in der Datenfelder-Tabelle (24);
- Speichern wenigstens eines Datensatzes in der Datentabellen-Tabelle (31), wobei jeder des wenigstens einen Datensatzes eine Tabelle der relationalen Datenbank (20) definiert;
- Speichern wenigstens eines Datensatzes in der Datensätze-Tabelle (23), wobei jeder des wenigstens einen Datensatzes wenigstens einen Datensatz der Tabelle definiert, die in der Datentabellen-Tabelle (31) definiert ist;
- Speichern wenigstens einen Datensatzes in der Datenspalten-Tabelle (25), wobei jeder des wenigstens einen Datensatzes wenigstens eine Spalte in der Tabelle definiert, die in der Datentabellen-Tabelle (31) definiert ist.

## Revendications

1. Base de données relationnelle (20), stockée dans une mémoire informatique, ladite base de données relationnelle comprenant une pluralité d'éléments de données et une pluralité d'informations relationnelles de ladite pluralité d'éléments de données, où ladite base de données relationnelle est composée d'une pluralité de tables (23, 24, 25, 31), comprenant au moins une table de champs de données (24), une table de tables de données (31), une table d'enregistrements de données (23) et une table de colonnes de données (25), et où ;
- ladite pluralité d'éléments de données est comprise dans ladite table de champs de données (24) ;
- ladite pluralité d'informations relationnelles de ladite pluralité d'éléments de données est comprise dans ladite table de tables de données (31), ladite table d'enregistrements de données (23) et ladite table de colonnes de données (25) ; **caractérisée en ce que**
- ladite table de tables de données (31) comprend une pluralité d'enregistrements définissant au moins une table de ladite base de données relationnelle ;
- ladite table d'enregistrements de données (23) comprend une pluralité d'enregistrements définissant au moins un enregistrement de ladite au moins une table de ladite table de tables de données (31) ;
- ladite table de colonnes de données (25) comprend une pluralité d'enregistrements définissant au moins une colonne de ladite au moins une table de ladite table de tables de données (31).

2. Base de données relationnelle (20) selon la revendication 1, dans laquelle ladite base de données relationnelle comprend en outre une table de bases de données (33), où ladite table de bases de données (33) comprend une pluralité d'enregistrements, chaque enregistrement définissant une seule base de données.

3. Base de données relationnelle (20) selon la revendication 2, dans laquelle ladite base de données relationnelle comprend en outre une table de branches de données (34), où ladite table de branches de données (34) comprend une pluralité d'enregistrements, chaque enregistrement définissant une seule branche de bases de données définies dans ladite table de bases de données (33).

4. Base de données relationnelle (20) selon l'une des revendications précédentes, dans laquelle ladite base de données relationnelle comprend en outre une table de règles de colonnes de données (27) et une table de règles commerciales (26), où ladite table de règles de colonnes de données (27) et ladite table de règles commerciales (26) comprennent une pluralité d'enregistrements, chaque enregistrement desdites règles de colonnes de données définissant une relation entre les enregistrements de ladite table de colonnes de données (25) et les enregistrements de ladite table de règles commerciales (26).

5. Base de données relationnelle (20) selon l'une des revendications précédentes, dans laquelle ladite base de données relationnelle comprend en outre une table d'entrées (21), ladite table d'entrées comprenant une pluralité d'enregistrements, chacun desdits enregistrements de ladite table d'entrées (21) définissant un objet stocké dans ladite base de données relationnelle (20), où ledit objet est défini par une pluralité d'éléments de données définis dans ladite table de champs de données (24).

6. Base de données relationnelle (20) selon la revendication 5, dans laquelle ladite base de données relationnelle comprend en outre une table d'enregistrements d'entrées (22), ladite table d'enregistrements d'entrées (22) comprenant une pluralité d'enregistrements, où un ou plusieurs desdits enregistrements de ladite table d'enregistrements d'entrées (22) définit/définissent laquelle desdites entrées de ladite table d'enregistrements de données (23) définit ledit objet.

7. Base de données relationnelle (20) selon l'une des revendications précédentes, dans laquelle ladite table de tables de données (31) comprend une colonne utilisateur agencée pour l'autorisation d'un utilisateur sur ladite table définie dans ladite table de tables de données (31).

8. Base de données relationnelle (20) selon la revendication 2, dans laquelle ladite table de bases de données (33) comprend une colonne utilisateur agencée pour l'autorisation d'un utilisateur sur ladite base de données définie dans ladite table de bases de données (33).

9. Base de données relationnelle (20) selon la revendication 3, dans laquelle ladite table de branches (34) comprend une colonne utilisateur agencée pour l'autorisation d'un utilisateur sur ladite branche définie dans ladite table de branches (34).

10. Base de données relationnelle (20) selon l'une des revendications précédentes, dans laquelle ladite table de tables de données (31) comprend au moins une clé étrangère.

11. Base de données relationnelle (20) selon la revendication 10, dans laquelle ladite base de données comprend en outre une table de clés étrangères comprenant au moins un enregistrement définissant un champ auquel fait référence ladite au moins une clé étrangère de ladite table de tables de données (31).

12. Base de données relationnelle (20) selon l'une des revendications précédentes, dans laquelle ladite base de données relationnelle comprend en outre une table de connecteurs (32), ladite table de connecteurs (32) comprenant une pluralité d'enregistrements, où chacun desdits enregistrements de ladite table de connecteurs (32) définit une connexion entre l'une desdites bases de données définies dans ladite table de bases de données (33) et une base de données externe à l'extérieur de ladite base de données relationnelle (20).

13. Serveur de base de données comprenant des moyens de stockage, dans lequel lesdits moyens de stockage comprennent une base de données relationnelle (20) selon l'une quelconque des revendications précédentes 1 à 12.

14. Système de gestion de base de données agencé pour stocker, récupérer, modifier et gérer des données dans une base de données relationnelle (20) selon l'une quelconque des revendications précédentes 1 à 12.

15. Procédé de stockage, de récupération, de modification et de gestion de données dans une base de données relationnelle (20), ladite base de données relationnelle (20) est stockée dans une mémoire informatique et comprend une pluralité d'éléments de données et une pluralité d'informations relationnelles de ladite pluralité d'éléments de données, où ladite base de données relationnelle comprend une pluralité de tables (23, 24, 25, 31), comprenant au moins une table de champs de données (24), une table de tables de données (31), une table d'enregistrements de données (23) et une table de colonnes de données (25), ledit procédé étant **caractérisé en ce qu'**il comprend les étapes consistant :
- à stocker ladite pluralité d'éléments de données dans ladite table de champs de données (24) ;
- à stocker au moins un enregistrement dans ladite table de tables de données (31), chacun desdits au moins un enregistrement définissant une table de ladite base de données relationnelle (20) ;
- à stocker au moins un enregistrement dans ladite table d'enregistrements de données (23), chacun desdits au moins un enregistrement définissant au moins un enregistrement de ladite table définie dans ladite table de tables de données (31) ;
- à stocker au moins un enregistrement dans ladite table de colonnes de données (25), chacun desdits au moins un enregistrement définissant au moins une colonne de ladite table définie dans ladite table de tables de données (31).
